# EUROPEAN PATENT SPECIFICATION

(11) **EP 4 030 189 B1**
(45) Date of publication and mention of the grant of the patent: **27.08.2025**
(21) Application number: 21151972.3
(22) Date of filing: 18.01.2021
(51) Int. Cl.: G01S 7/481, G01S 17/931

(54) **LIDAR-SENSOR**
LIDARSENSOR
CAPTEUR LIDAR

(43) Date of publication of application: 20.07.2022
(73) Proprietor: Robert Bosch GmbH, 70442 Stuttgart (DE)
(72) Inventor: SIMONOVICS, Janos, 7623 Pecs (HU)

(56) References cited:
- DE-A1- 102017 101 791
- JP-A- 2014 081 332

## Description

### Related Art

The present invention relates to a lidar-sensor and more specifically to a lidar-sensor for a vehicle.

The main focus of the automotive industry today is on developing autonomous driving capabilities for vehicles. To achieve such autonomous driving capabilities, there are often being used different kinds of environmental sensors, which include e.g. cameras and in particular lidar-sensors. Initially used lidar-sensors had often 360° cylindrical shapes and employed continuously rotating elements to provide a certain field of view (FOV) for the detector with respect to the environment.

Today, there is a trend to replacing such macro-mechanical scanning technologies by lidar technologies employing MEMS (micro-electro-mechanical system) or OPA (optical phased array) or others. While such lidar-systems provide the advantage of not depending on macro-mechanical parts (which can lead to lower costs and/or less error-prone systems), they usually have a limited field of view compared to rotating scanning systems.

Also known from the related art are so called "smart mirrors", which are electrically switchable mirrors, that are transparent to certain light in a first switching state and that are reflective to this light in a second switching state.

DE 10 2017 101 791 A1 discloses an optoelectric sensor device with at least two deflection units each consisting of a plurality of non-movable switchable mirrors for deflecting two laser-beams of the optoelectric sensor at the same time into different spatial directions.

### Disclosure of the invention

The present invention discloses a lidar-sensor. The lidar-sensor is not limited to a certain lidar-sensor technology and is for instance a scanning or a non-scanning system based upon flash-lidar, structured light, or other principles.

The lidar-sensor according to the present invention comprises a laser-source (e.g. a laser-diode, etc.), a switchable, preferably electrically switchable mirror, which is arranged to receive a laser-beam from the laser-source and a control unit. The control unit is for instance an ASIC, a FPGA, a processor, a digital signal-processor, a microcontroller or the like and is preferably electrically connected to an internal and/or external memory unit.

The switchable mirror is switchable between a first switching state and a second switching state, wherein it is substantially transparent to the laser-beam of the laser-source in the first switching state and substantially reflective to the laser-beam of the laser-source in the second switching state. The control unit is electrically connected to the switchable mirror and is configured to switch the switchable mirror to the first switching state, in order to transmit the laser-beam of the laser-source via a first optical path to an environment of the lidar-sensor (e.g. through a first transparent window of the lidar-sensor) and to the second switching state, in order to transmit the laser-beam of the laser-source via a second optical path, which is different from the first optical path, to the environment of the lidar-sensor (e.g. through the first transparent window or a second transparent window of the lidar-sensor).

The lidar-sensor comprises a deflection unit wherein the deflection unit is part of the laser-source and/or is arranged between the laser-source and the switchable mirror. The deflection is configured to change a deflection angle of the laser-beam in a continuous manner.

This enables the lidar-sensor according to the present invention, to influence the laser-beam of the laser-source in different ways by the usage of the at least two separate optical paths within the lidar-sensor. A particularly advantageous usage of this concept is the extension/widening of a field of view of the lidar-sensor by this concept. Since possible directions of the first and second optical paths are basically not limited according to the present invention, it is possible to reduce a number of otherwise required separate lidar-sensors by using a lidar-sensor according to the present invention.

Also, since no mechanically moving parts are needed for this concept, it provides a very robust and/or cost-effective way of extending the field of view of the lidar-sensor. Further and more detailed possibilities of influencing the laser-beam by the proposed configuration will be described below.

The lidar-sensor is not limited to the above mentioned components and might include further components like additional static or movable mirrors for redirecting the laser-beam along the first and/or second optical path. Furthermore, it is possible to add one or more optical elements for affecting optical properties of the laser-beam (e.g. its shape, divergence, energy, etc.) in between the laser-source and the switchable mirror and/or to the first and/or second optical path.

It is preferred that reflections (also called "echos") of the transmitted laser-beam, which are caused by objects in the environment of the liar-sensor, will reenter the lidar-sensor via the same optical path the laser-beam took during its transmission into the environment, to be directed to a receiving unit of the lidar-sensor. Alternatively, reflections of the lidar-beam might also take a path to the receiving unit that differs from the sending path.

The dependent claims show preferred embodiments of the invention.

In a preferred embodiment of the present invention, the first optical path and the second optical path have different beam-angles or different beam-angle-ranges of the laser-beam with respect to the lidar-sensor when leaving the lidar-sensor. For example, the lidar-sensor is configured in such a way, that when switching to the first optical path via the switchable mirror, the laser-beam leaves a housing of the lidar-sensor at a first side of the housing, whereas when switching to the second optical path via the switchable mirror, the laser-beam leaves the housing at a second side of the housing of the lidar-sensor, which is e.g. opposite to the first side of the housing. In other words, by using such a configuration, it is possible to switch the laser-beam from front to rear or in general from one side to another side of the lidar-sensor. Note, that this example is not intended to limit the usage of the switchable mirror to the configuration described above. Instead, it is possible to route the laser-beam to any side of the lidar-sensor housing and use any suitable beam-angle between the first and the second optical path. Further, the different beam-angles or beam-angle-ranges of the first optical path and the second optical path are adjacent or overlapping or disjoint beam-angles or beam-angle-ranges. While the term "beam-angle" generally refers to a beam-angle of the laser-beam when the laser-beam is not being moved in a certain scanning direction between the laser-source and the switchable mirror, the term "beam-angle-range" refers to an angle-range of the laser-beam, which is created by deflecting the laser-beam between the laser-source and the switchable mirror.

Moreover, it is possible, that the first optical path and the second optical path provide a different beam-forming and/or a different beam-damping. For instance, this allows for adjusting the laser-beam to different detection ranges. This might be achieved by using different optical elements like lenses, filters, etc. in the first and/or the second optical path.

In a favorable embodiment of the present invention, the control unit is configured to switch the switchable mirror in accordance with (current) eye-safety requirements. This is achievable, for example, by placing an optical damping element (e.g. a grey-filter, etc.) in one of the optical paths, while the other one of the optical paths does not contain such an element or contains a damping element with a lower damping factor. Whenever there is a situation, in which a high eye-safety has to be ensured, the control unit is now able to switch to the optical path with the higher damping factor to lower the energy of the laser-beam leaving the lidar-sensor. Moreover, it is possible to switch the switchable mirror in accordance with a desired detection area of the environment (e.g. in front/rear-, up/down-, left/right-area, etc.) and/or a (current) traffic situation and/or a (current) weather situation. This is particularly useful, when the lidar-sensor is part of an environment detection system of a vehicle or the like, so that it is possible to feed such an environment detection system at all times with the most suitable environment information by the lidar-sensor.

Furthermore, it is desirable, that the control unit is capable of switching the switchable mirror in accordance with a steering wheel angle and/or a trajectory and/or a moving direction of a vehicle using the lidar-sensor.

In another embodiment of the present invention the deflection unit is based on a mechanical (e.g. macro-scanner, MEMS, micro-motion, etc.) and/or a non-mechanical (e.g. optical-phased-array, electro-optical, liquid-crystal, etc.) deflection technology.

Moreover, it is possible, that the respective beam deflection directions of the deflection unit and the switchable mirror each correspond to an identical primary deflection direction of the lidar-sensor, which is for example a horizontal or a vertical scanning direction. For example, this embodiment can be particularly advantageous when a limited field of view (e.g. in a horizontal scanning direction due to using a non-rotating deflection unit) should be extended seamlessly. By using two consecutive scan runs of such a limited deflection unit with different switching states of the switchable mirror, it is possible to deflect the laser-beam during the first scan run e.g. to the standard field view of the lidar-sensor and deflect the laser-beam in the second scan run to an adjacent field of view in a main (primary) scanning direction, so that a total field of view is therefore twice as wide in the main scanning direction of the lidar-sensor. Additionally or alternatively it is possible that the deflection unit corresponds to the primary deflection direction of the lidar-sensor and a beam deflection direction of the switchable mirror corresponds to a secondary deflection direction if the lidar-sensor, which is different from the primary deflection direction. In general, an angle between the first and the second deflection direction is not limited to a certain angle or angle range, but a preferred angle between these two directions is an angle of 90°.

In another advantageous embodiment of the present invention, the switchable mirror is a first switchable mirror and the lidar-sensor further comprises at least a second switchable mirror, which is arranged within the first optical path. Further, the control unit is configured to switch the second switchable mirror to the first switching state, in order to transmit the laser-beam of the laser-source via the first optical path and to the second switching state, in order to transmit the laser-beam of the laser-source via a third optical path of the lidar-sensor, which is different from the first optical path and from the second optical path. This allows for providing a plurality of different beam-angles and/or different optical properties, so that a flexibility of such a lidar-sensor is being further enhanced. It is also conceivable to use an even higher number of consecutively arranged switchable mirrors within the first optical path, in order to become a main deflection unit for the lidar-sensor itself, which is then capable of providing a scanning functionality without using any further deflection units (e.g. rotating mirrors, etc.).

Preferably, the lidar-sensor according to the present invention is a lidar-sensor of a vehicle and is being used, for example, as part of an environment detection system of such a vehicle. The vehicle is for instance a road vehicle (car, bus, truck, bicycle, motorcycle, etc.), a railroad vehicle, an air vehicle, or the like.

### Brief description of the drawings

Exemplary embodiments of the invention are described in detail below with reference to the accompanying drawings. In the drawings,
- Figure 1: is a top view of a lidar-sensor according to the invention in a first embodiment;
- Figure 2: is a top view of a lidar-sensor according to the invention in a second embodiment;
- Figure 3: is a perspective view of a lidar-sensor according to the invention in a third embodiment; and
- Figure 4: is view of a lidar-sensor according to the invention in combination with a vehicle.

### Embodiments of the invention

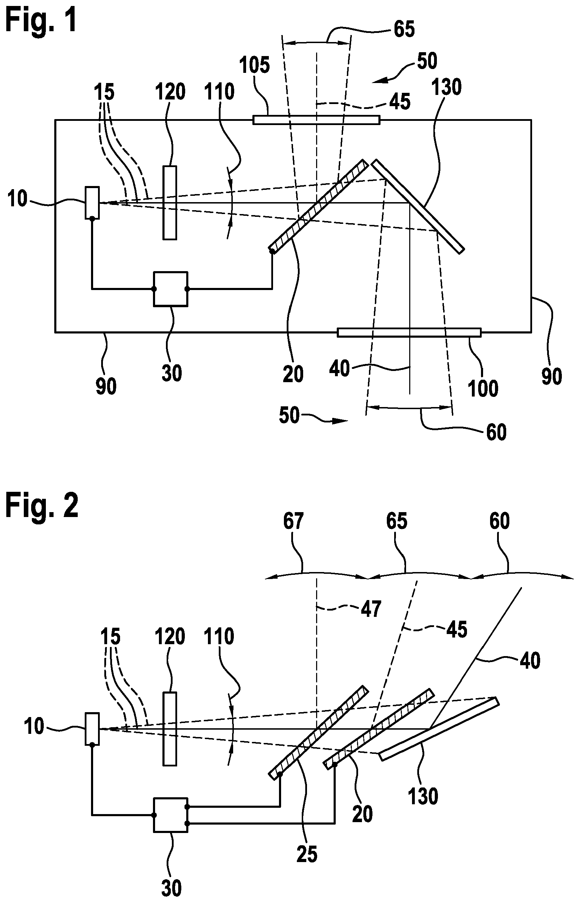

Figure 1 shows a top view of a lidar-sensor according to the invention in a first embodiment. The lidar-sensor includes a laser-source 10, which is a laser-diode, an optical element 120 for shaping a laser-beam 15 produced by the laser-source 10. The laser-source 10 is configured to deflect the laser-beam 15 to a certain degree based on a micro-mirror-array. This deflection is indicated by the dashed lines of the laser-beam 15 and a deflection range 110. The lidar-sensor further comprises a first optical path 40 for the laser-beam 15, which leads to an environment 50 of the lidar-sensor via a non-switchable and non-movable mirror 130. The laser-beam 15 following the first optical path 40 leaves the lidar-sensor through a first window 100 of the lidar-sensor, which is transparent for a wavelength of the laser-beam 15. The deflection range 110 of the laser-source 10 results in a first beam-angle-range 60 for scanning the environment by using the first optical path 40. Additionally, the lidar-sensor comprises an electrically switchable mirror 20, which is switchable between a first (transparent) and a second (reflective) switching state.

A control unit 30 of the lidar-sensor, which is a microcontroller, is electrically connected to the laser-source 10 and the switchable mirror 20 and is configured, to switch the switchable mirror 20 from the first state to the second state and vice versa. If the switchable mirror 20 is switched to the first switching state, the laser-beam 15 is being transmitted via the first optical path 40. If the switchable mirror 20 is switched to the second switching state, the laser-beam 15 is being transmitted via a second optical path 45. By following the second optical path 45, the laser-beam 15 leaves the lidar-sensor through a second window 105 and enters the environment 50 at an opposite side of the lidar-sensor. A second beam-angle-range 65 of the second optical path 45 resulting from the deflection range 110, is shown by respective dashed lines.

The lidar-sensor according to the first embodiment of the present invention is therefore configured to switch its scanning areas from one side to another, which can be advantageously used in vehicles or other applications, in order to save a second lidar-sensor for scanning an opposite direction.

Furthermore, it is possible to add one or more optical elements 120 to one or both of the optical paths 40, 45, to achieve additional beam-forming and/or beam-damping, which allows for a flexible adaptation of the properties of the laser-beam 15 for each optical path 40, 45.

It is also possible to switch between the first state and the second state of the switchable mirror 20 in accordance with a current traffic situation and/or a current moving direction of a vehicle employing the lidar-sensor.

Figure 2 shows a top view of a lidar-sensor according to the invention in a second embodiment. In order to avoid repetitions, only differences between the second and the first embodiment will be described below. The lidar-sensor in the second embodiment comprises a first switchable mirror 20 and a second switchable mirror 25, which are arranged consecutively within a first optical path 40 of the lidar-sensor. In this case, both switchable mirrors 20, 25 are electrically connected to the control unit 30. By switching the first and the second switchable mirrors 20, 25 in a suitable fashion, the lidar-sensor is configured to use three adjacent beam-angle-ranges 60, 65, 67, which are provided by three separate optical paths 40, 45, 47. In this way, a field of view of the lidar-sensor is extended along a main (primary) deflection direction of the lidar-sensor.

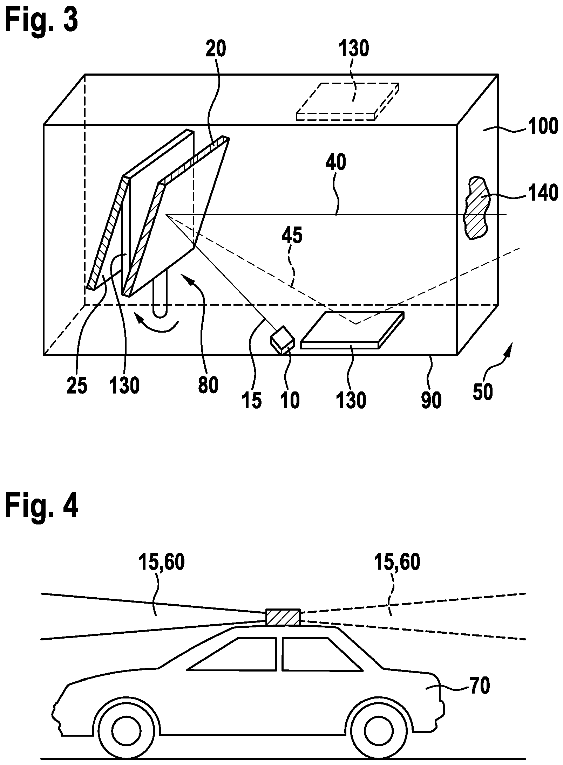

Figure 3 shows a perspective view of a lidar-sensor according to the invention in a third embodiment. In order to avoid repetitions, only differences between the third, the second and the first embodiment will be described below. In this embodiment the lidar-sensor comprises a rotating deflection unit 80, which includes a non-switchable mirror 130, which is being used for transmitting a laser-beam from the laser-source 10 via a first optical path 40 (a standard path of the lidar-sensor) through a window 100 to an environment 50 of the lidar-sensor.

A main (primary) deflection direction of the deflection unit 80 is indicated by the arrow in Fig. 3. Also, the deflection unit 80 includes a first switchable mirror 20 and a second switchable mirror 25, which have different angle orientations with respect to the first optical path 40. In other words, the first and the second switchable mirrors 20, 25 are inclined in opposite ways in a secondary scanning direction of the lidar-sensor. If both of the switchable mirrors 20, 25 are in their first switching state, the laser-beam will be reflected by the non-switchable mirror 130 of the deflection unit 80 (on both sides of this two-sided-mirror). In case there is a contamination on the surface of the window 100, which affects the first optical path 40, this impairment can be detected (e.g. by evaluating an expected energy of the reflected laser-beam) and in response, the control unit (30) (not shown) can be configured to switch either the first or the second switchable mirror 20, 25 or both switchable mirrors 20, 25 to the second switching state. This results in respective redirections of the laser-beam via a second optical path 45 and/or a third optical path 47, which are both laid out to pass the window 100 at different positions, so that the contamination can hopefully be avoided. For this, additional non-switchable mirrors 130 are placed on the top and on the bottom of the housing 90 of the lidar-sensor. It should be noted, that these additional mirrors 130 are not mandatory, but they might be helpful to deflect the laser-beam more easily into an area of the environment 50, that corresponds with the first optical path 40. It should also be noted, that the switchable mirrors 20, 25 might have different orientations with respect to the first optical path 40 than the ones that are shown here (e.g. the same orientation/angle).

Figure 4 shows a lidar-sensor according to the invention in combination with a vehicle 70. The lidar-sensor is mounted on top of the vehicle 70 and provides, based on the configuration of Fig. 1, a first beam-angle-range 60 and a second beam-angle-range 65 of a laser-beam 15 of the lidar-sensor. This allows for switching a scanning direction of the environment from a front to a rear direction and vice verse, depending e.g. on a current traffic situation.

## Claims

1. A lidar-sensor comprising:
• a laser-source (10),
• a switchable mirror (20), arranged to receive a laser-beam (15) from the laser-source (10), and
• a control unit (30),
wherein
• the switchable mirror (20)
∘ is switchable between a first switching state and a second switching state,
∘ is substantially transparent to the laser-beam (15) of the laser-source (10) in the first switching state, and
∘ is substantially reflective to the laser-beam (15) of the laser-source (10) in the second switching state,
• the control unit (30) is electrically connected to the switchable mirror (20) and configured to switch the switchable mirror (20)
∘ to the first state in order to transmit the laser-beam (15) of the laser-source (10) via a first optical path (40) to an environment (50) of the lidar-sensor, and
∘ to the second state in order to transmit the laser-beam (15) of the laser-source (10) via a second optical path (45), which is different from the first optical path (40) to the environment (50) of the lidar-sensor,
**characterized in that**
• the lidar-sensor comprises a deflection unit (80), wherein the deflection unit
∘ is part of the laser-source (10) and/or is arranged between the laser-source (10) and the switchable mirror (20), and
∘ is configured to change a deflection angle of the laser-beam (15) in a continuous manner.

2. The lidar-sensor according to claim 1, wherein
• the first optical path (40) and the second optical path (45) have different beam-angles or beam-angle-ranges (60, 65) of the laser-beam (15) with regard to the lidar-sensor when leaving the lidar-sensor, and
• the different beam-angles or beam-angle-ranges of the first optical path (40) and the second optical path (45) are adjacent or overlapping or disjoint beam-angles or beam-angle-ranges (60, 65).

3. The lidar-sensor according any one of the previous claims, wherein the first optical path (40) and the second optical path (45) provide:
• a different beam forming, and/or
• a different beam damping.

4. The lidar-sensor according to any one of the previous claims, wherein the control unit (30) is configured to switch the switchable mirror (20) in accordance with
• eye-safety requirements, and/or
• a desired detection area of the environment (50), and/or
• a traffic situation, and/or
• a weather situation.

5. The lidar-sensor according to any one of the previous claims, wherein the control unit (30) is configured to switch the switchable mirror (20) in accordance with
• a steering wheel angle, and/or
• a trajectory, and/or
• a moving direction
of a vehicle (70) using the lidar-sensor.

6. The lidar-sensor according to any one of the previous claims, wherein the deflection unit (80) is based on a mechanical and/or a non-mechanical deflection technology.

7. The lidar-sensor according to any one of the previous claims, wherein
• respective beam deflection directions of the deflection unit (80) and the switchable mirror (20) each correspond to an identical primary deflection direction of the lidar-sensor, or
• a beam deflection direction of the deflection unit (80) corresponds to the primary deflection direction of the lidar-sensor and a beam deflection direction of the switchable mirror (20) corresponds to a secondary deflection direction of the lidar-sensor, which is different **from the** primary deflection direction.

8. The lidar-sensor according to any one of the previous claims, wherein
• the switchable mirror is a first switchable mirror (20),
• the lidar-sensor further comprises at least a second switchable mirror (25), which is arranged within the first optical path (40),
• the control unit (30) is configured to switch the second switchable mirror (25)
∘ to the first switching state in order to transmit the laser-beam (15) of the laser-source (10) via the first optical path (40), and
∘ to the second switching state in order to transmit the laser-beam (15) of the laser-source (10) via a third optical path (47) of the lidar-sensor, which is different from the first optical path (40) and from the second optical path (45).

9. Use of the lidar-sensor according to any one of the previous claims in a vehicle (70).

## Patentansprüche

1. Lidar-Sensor, der Folgendes umfasst:
• eine Laserquelle (10),
• einen umschaltbaren Spiegel (20), der angeordnet ist, um einen Laserstrahl (15) von der Laserquelle (10) zu empfangen, und
• eine Steuereinheit (30),
wobei
• der umschaltbare Spiegel (20)
o zwischen einem ersten Schaltzustand und einem zweiten Schaltzustand umschaltbar ist,
o im ersten Schaltzustand für den Laserstrahl (15) der Laserquelle (10) im Wesentlichen transparent ist, und
o im zweiten Schaltzustand für den Laserstrahl (15) der Laserquelle (10) im Wesentlichen reflektierend ist,
• wobei die Steuereinheit (30) elektrisch mit dem umschaltbaren Spiegel (20) verbunden und dazu ausgelegt ist, den umschaltbaren Spiegel (20)
o in den ersten Zustand umzuschalten, um den Laserstrahl (15) der Laserquelle (10) über einen ersten optischen Pfad (40) zu einer Umgebung (50) des Lidar-Sensors zu übertragen, und
o in den zweiten Zustand umzuschalten, um den Laserstrahl (15) der Laserquelle (10) über einen zweiten optischen Pfad (45), der sich von dem ersten optischen Pfad (40) unterscheidet, zu der Umgebung (50) des Lidar-Sensors zu übertragen,
**dadurch gekennzeichnet, dass**
• der Lidar-Sensor eine Ablenkeinheit (80) umfasst, wobei die Ablenkeinheit
o Teil der Laserquelle (10) ist und/oder zwischen der Laserquelle (10) und dem umschaltbaren Spiegel (20) angeordnet ist, und
o dazu ausgelegt ist, einen Ablenkwinkel des Laserstrahls (15) kontinuierlich zu ändern.

2. Lidar-Sensor nach Anspruch 1, wobei
• der erste optische Pfad (40) und der zweite optische Pfad (45) beim Verlassen des Lidar-Sensors unterschiedliche Strahlwinkel oder Strahlwinkelbereiche (60, 65) des Laserstrahls (15) bezüglich des Lidar-Sensors aufweisen,
und
• die unterschiedlichen Strahlwinkel bzw. Strahlwinkelbereiche des ersten optischen Pfades (40) und des zweiten optischen Pfades (45) angrenzende oder überlappende oder disjunkte Strahlwinkel bzw. Strahlwinkelbereiche (60, 65) sind.

3. Lidar-Sensor nach einem der vorhergehenden Ansprüche, wobei der erste optische Pfad (40) und der zweite optische Pfad (45) Folgendes bereitstellen:
• eine unterschiedliche Strahlformung, und/oder
• eine unterschiedliche Strahldämpfung.

4. Lidar-Sensor nach einem der vorhergehenden Ansprüche, wobei die Steuereinheit (30) dazu ausgelegt ist, den umschaltbaren Spiegel (20) umzuschalten entsprechend
• Anforderungen an die Augensicherheit und/oder
• einem gewünschten Detektionsbereich der Umgebung (50) und/oder
• einer Verkehrssituation, und/oder
• einer Wettersituation.

5. Lidar-Sensor nach einem der vorhergehenden Ansprüche, wobei die Steuereinheit (30) dazu ausgelegt ist, den umschaltbaren Spiegel (20) umzuschalten entsprechend
• einem Lenkradwinkel und/oder
• einer Trajektorie, und/oder
• einer Bewegungsrichtung
eines Fahrzeugs (70), das den Lidar-Sensor einsetzt.

6. Lidar-Sensor nach einem der vorhergehenden Ansprüche, wobei die Ablenkeinheit (80) auf einer mechanischen und/oder einer nicht-mechanischen Ablenkungstechnologie basiert.

7. Lidar-Sensor nach einem der vorhergehenden Ansprüche, wobei
• jeweilige Strahlablenkrichtungen der Ablenkeinheit (80) und des umschaltbaren Spiegels (20) jeweils einer identischen primären Ablenkrichtung des Lidar-Sensors entsprechen, oder
• eine Strahlablenkrichtung der Ablenkeinheit (80) der primären Ablenkrichtung des Lidar-Sensors und eine Strahlablenkrichtung des umschaltbaren Spiegels (20) einer sekundären Ablenkrichtung des Lidar-Sensors entspricht, die von der primären Ablenkrichtung verschieden ist.

8. Lidar-Sensor nach einem der vorhergehenden Ansprüche, wobei
• der umschaltbare Spiegel ein erster umschaltbarer Spiegel (20) ist,
• der Lidar-Sensor ferner mindestens einen zweiten umschaltbaren Spiegel (25) umfasst, der innerhalb des ersten optischen Pfades (40) angeordnet ist,
• die Steuereinheit (30) dazu ausgelegt ist, den zweiten umschaltbaren Spiegel (25)
o in den ersten Schaltzustand umzuschalten, um den Laserstrahl (15) der Laserquelle (10) über den ersten optischen Pfad (40) zu übertragen, und
o in den zweiten Schaltzustand umzuschalten, um den Laserstrahl (15) der Laserquelle (10) über einen dritten optischen Pfad (47) des Lidar-Sensors zu übertragen, der sich von dem ersten optischen Pfad (40) und von dem zweiten optischen Pfad (45) unterscheidet.

9. Verwenden des Lidar-Sensors nach einem der vorhergehenden Ansprüche in einem Fahrzeug (70).

## Revendications

1. Capteur lidar, comprenant :
• une source laser (10),
• un miroir commutable (20), agencé pour recevoir un faisceau laser (15) provenant de la source laser (10), et
• une unité de commande (30),
dans lequel
• le miroir commutable (20)
o est commutable entre un premier état de commutation et un second état de commutation,
o est sensiblement transparent au faisceau laser (15) de la source laser (10) dans le premier état de commutation, et
o est sensiblement réfléchissant au faisceau laser (15) de la source laser (10) dans le second état de commutation,
• l'unité de commande (30) est reliée électriquement au miroir commutable (20) et configurée pour commuter le miroir commutable (20)
o dans le premier état afin de transmettre le faisceau laser (15) de la source laser (10) par l'intermédiaire d'un premier trajet optique (40) à un environnement (50) du capteur lidar, et
o dans le second état afin de transmettre le faisceau laser (15) de la source laser (10) par l'intermédiaire d'un second trajet optique (45), qui est différent du premier trajet optique (40), à l'environnement (50) du capteur lidar,
**caractérisé en ce que**
• le capteur lidar comprend une unité de déviation (80), dans lequel l'unité de déviation
o fait partie de la source laser (10) et/ou est agencée entre la source laser (10) et le miroir commutable (20), et
o est configurée pour changer un angle de déviation du faisceau laser (15) de manière continue.

2. Capteur lidar selon la revendication 1, dans lequel
• le premier trajet optique (40) et le second trajet optique (45) ont des angles de faisceau ou des plages d'angles de faisceau (60, 65) du faisceau laser (15) différents par rapport au capteur lidar en sortie du capteur lidar, et
• les angles de faisceau ou plages d'angles de faisceau différents du premier trajet optique (40) et du second trajet optique (45) sont des angles de faisceau ou plages d'angles de faisceau (60, 65) adjacents ou chevauchants ou disjoints.

3. Capteur lidar selon l'une quelconque des revendications précédentes, dans lequel le premier trajet optique (40) et le second trajet optique (45) fournissent :
• une formation de faisceau différente, et/ou
• un amortissement de faisceau différent.

4. Capteur lidar selon l'une quelconque des revendications précédentes, dans lequel l'unité de commande (30) est configurée pour commuter le miroir commutable (20) selon
• des exigences de sécurité oculaire, et/ou
• une zone de détection souhaitée de l'environnement (50), et/ou
• une situation de trafic, et/ou
• une situation météorologique.

5. Capteur lidar selon l'une quelconque des revendications précédentes, dans lequel l'unité de commande (30) est configurée pour commuter le miroir commutable (20) selon
• un angle de volant, et/ou
• une trajectoire, et/ou
• une direction de déplacement
d'un véhicule (70) à l'aide du capteur lidar.

6. Capteur lidar selon l'une quelconque des revendications précédentes, dans lequel l'unité de déviation (80) est basée sur une technologie de déviation mécanique et/ou non mécanique.

7. Capteur lidar selon l'une quelconque des revendications précédentes, dans lequel
• des directions de déviation de faisceau respectives de l'unité de déviation (80) et du miroir commutable (20) correspondent chacune à une direction de déviation primaire identique du capteur lidar, ou
• une direction de déviation de faisceau de l'unité de déviation (80) correspond à la direction de déviation primaire du capteur lidar et une direction de déviation de faisceau du miroir commutable (20) correspond à une direction de déviation secondaire du capteur lidar, qui est différente de la direction de déviation primaire.

8. Capteur lidar selon l'une quelconque des revendications précédentes, dans lequel
• le miroir commutable est un premier miroir commutable (20),
• le capteur lidar comprend en outre au moins un second miroir commutable (25), qui est agencé à l'intérieur du premier trajet optique (40),
• l'unité de commande (30) est configurée pour commuter le second miroir commutable (25)
o dans le premier état de commutation afin de transmettre le faisceau laser (15) de la source laser (10) par l'intermédiaire du premier trajet optique (40), et
o dans le second état de commutation afin de transmettre le faisceau laser (15) de la source laser (10) par l'intermédiaire d'un troisième trajet optique (47) du capteur lidar, qui est différent du premier trajet optique (40) et du second trajet optique (45).

9. Utilisation du capteur lidar selon l'une quelconque des revendications précédentes dans un véhicule (70).
